# EUROPÄISCHE PATENTSCHRIFT

(11) **EP 0 983 111 B1**
(45) Veröffentlichungstag und Bekanntmachung des Hinweises auf die Patenterteilung: **10.07.2002**
(21) Anmeldenummer: 98928280.1
(22) Anmeldetag: 16.05.1998
(51) Int. Cl.: B01D 29/07, F02M 37/22

(54) **Siebelement und Verfahren zu siener Herstellung**
Screen element and method of making the same
Elément filtrant et procédé de fabrication d'un tel élément

(30) Priorität: 22.05.1997 DE 19721427
(43) Veröffentlichungstag der Anmeldung: 08.03.2000
(73) Patentinhaber: FILTERWERK MANN & HUMMEL GmbH, 71631 Ludwigsburg (DE); Otto Klumpp GmbH Kunststofftechnik, 72336 Balingen (DE)
(72) Erfinder: FÜHRER, Frank, D-74321 Bietigheim-Bissingen (DE); PIERUSCHKA, Birgit, D-71576 Burgstetten 1 (DE); SOMMER, Frank, D-72336 Balingen (DE)
(74) Vertreter: Voth, Gerhard, Dipl.-Ing.
(86) Internationale Anmeldenummer: EP9802890
(87) Internationale Veröffentlichungsnummer: WO9852670

(56) Entgegenhaltungen:
- EP-A- 0 065 422
- EP-A- 0 400 170
- DE-A- 4 026 230
- DE-A- 19 537 269
- DE-U- 9 320 069
- DE-U- 29 508 681
- US-A- 4 312 753
- US-A- 4 361 128
- US-A- 4 918 017
- PATENT ABSTRACTS OF JAPAN vol. 11, no. 297 (C-448), 25. September 1987 & JP 62 087216 A (TOYO ROKI SEIZO), 21. April 1987

## Beschreibung

Die Erfindung betrifft ein Siebelement insbesondere zur Filtrierung von flüssigen oder gasförmigen Stoffen nach dem Oberbegriff des unabhängigen Anspruch 1, und ein Verfahren zur Herstellung eines Siebelements nach Anspruch 1.

Aus der DE 195 37 269 ist ein Siebelement bekannt, dieses wird in ein Ansaugrohr in einer Brennkraftmaschine angeordnet. Das Element besteht aus Metalldraht und hat die Aufgabe, die Strömung der Ansaugluft zu vergleichmäßigen und damit für eine Geräuschreduzierung zu sorgen. Solche Siebelemente werden üblicherweise derart hergestellt, daß ein vorgefertigtes Siebteil in eine Spritzgießmaschine eingelegt und dort mit einem Haltering umspritzt wird. Da eine gewisse Stabilität des Siebelements erforderlich ist, wird bevorzugt Metall für den Siebbereich verwendet.

Siebelemente der Eingangs genannten Art werden in allen Bereichen der Technik angewendet. Aufgrund der Forderung nach einer bestimmten Formstabilität sind grundsätzlich Materialien mit einer hohen Steifigkeit erforderlich.

Der Nachteil bei der Verwendung solcher Materialien liegt darin, daß aufgrund der hohen Steifigkeit das Material eine bestimmte Dicke aufweisen muß, dadurch entsteht der Nachteil, daß sich der Durchflußwiderstand aufgrund des höheren Materialeinsatzes erhöht.

Aus der US 4 312 753 ist ein Siebelement zur Filtrierung flüssiger oder gasförmiger Stoffe bekannt. Dieses ist ein flaches Element, welches Stützstege aufweist. Ein Nachteil dieses Elements liegt darin, dass die wirksame Filterfläche gering ist und deshalb der Druchflußwiderstand, besonders bei sehr großen zu filternden Fluidmengen, stark ansteigt.

Der Erfindung liegt die Aufgabe zugrunde, die wirksame Filterfläche eines Siebelements mit Stegen zu erhöhen und damit einen geringen Durchflußwiderstand zu gewährleisten.

Diese Aufgabe wird ausgehend von dem Oberbegriff des unabhängigen Anspruchs 1 durch dessen kennzeichnenden Merkmale gelöst.

Der wesentliche Vorteil der Erfindung besteht darin, daß als Material für das Siebelement ein Gewirke verwendet werden kann, welches zwar nicht formstabil ist dafür einen geringen Durchflußwiderstand aufweist. Die Formstabilität wird dadurch erzielt, daß das Gewirke mit einem Stützskelett verbunden ist. Dieses Stützskelett kann aus einem thermoplastischen Kunststoff bestehen und je nach Anwendungsfall gestaltet werden, das heißt optimal an der Anwendung angepaßt werden. Es besteht auch die Möglichkeit, Duroplaste oder Elastomere zur Herstellung des Stützskelettes zu verwenden.

Das Stützskelett ist mit dem Haltering oder dem Halteelement verbunden. Dadurch erhöht sich die Formstabilität.

Das Gewirke ist gemäß einer Weiterbildung der Erfindung ein Kunststoffgewirke und aus monofilen oder multifilen Fasern hergestellt. Zur Erhöhung der wirksamen Oberfläche des Siebelementskönnen beliegige Freiformflächen oder Regelflächen gewählt werden. Ein solches Siebelement eignet sich für verschiedene Medien wie zum Beispiel Luft, Wasser, Kraftstoff, Öl oder ähnliches und kann sowohl im Automobilbau als auch in der Medizin oder im allgemeinen Anlagebau eingesetzt werden.

Ein Vorteil bei der Verwendung eines Gewirkes ist die hohe Elastizität und zwar sowohl in Längs-als auch in Querrichtung. Diese Elastizität verhindert bei einer starken Beanspruchung eine Beschädigung des Siebelements.

Ein Verfahren zur Herstellung eines Siebelements zur Filtrierung von Flüssigkeiten oder Gase mit einem Haltering und Halteelement, einem daran angeordneten Siebfilter,weist folgende Schritte auf Ein Gewirke wird als Siebfilter in eine Fertigungsmaschine eingelegt und dann mit einem Stützskelett und einem Haltering und Halteelement aus thermoplastischem Kunststoff umspritzt. Das Gewirke kann dabei in einer bevorzugten Ausgestaltung der Erfindung von einem Band der Maschine zugeführt werden.

Weitere Merkmale von bevorzugten Weiterbildungen der Erfindung gehen außer aus den Ansprüchen auch aus der Beschreibung und den Zeichnungen hervor.

Die Erfindung wird nachfolgend anhand eines Beispiels näher erläutert.

Es zeigt
- Figur 1: einen Siebkorb in der Seitenansicht
- Figur 2: einen Siebkorb in einer Draufsichtdarstellung

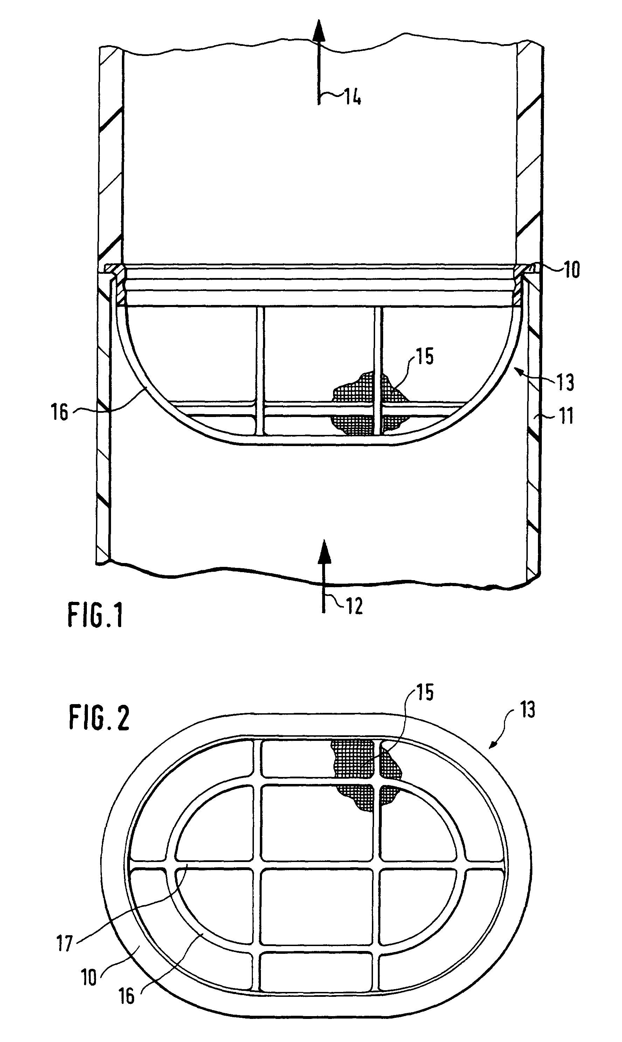

Die Seitenansicht eines Siebelements gemäß Figur 1 zeigt einen Haltering 10 welcher in einem Rohr 11 eingesetzt ist. Durch dieses Rohr wird Luft oder Flüssigkeit gemäß dem Pfeil 12 zugeführt, durchströmt das Siebelement 13 und verläßt gemäß Pfeil 14 gereinigt diesen Filterbereich. Das Siebelement 13 besteht wie bereits erwähnt - aus einem Haltering 10 an diesen ist ein Gewirke 15 angeordnet, sowie ein Stützskelett 16 für das Gewirke.

Das Gewirke ist ein textiles Flächengebilde, welches durch Wirken oder Stricken hergestellt ist. Die besondere Eigenschaft des Gewirkes, bzw. der Maschenware ist ihre Elastizität, das Nachgeben auf Zug in Längs-, Quer-und Diagonalrichtung und das zurückkehren in die alte Lage wenn die Beanspruchung aufhört. Maschenware läßt sich sehr gut formen, der Grad der Elastizität ist abhängig von dem Material, der Maschenfestigkeit und der Bindungsart. Eine weitere wertvolle Eigenschaft ist die hohe Luftdurchlässigkeit. Insbesondere bei der Verwendung als Sieb oder Filterelement ist diese hohe Luft-oder Flüssigkeitsdurchlässigkeit bei einem guten Rückhaltevermögen von Fremdstoffen gefordert.

Das Stützskelett 16 ist mit dem Haltering 10 verbunden und wird bei einem thermoplastischen Spritzgießvorgang hergestellt und mit dem Gewirke 15 verbunden. Ein Vorteil dieses Stützskeletts besteht darin, daß ganz besonders stark beanspruchte Stellen oder Flächenbereiche des Siebelements 13 mit einer Verstärkungsstruktur ausgestattet werden können.

Gemäß Figur 2, welche die Draufsichtdarstellung auf das Siebelement 13 beinhaltet, ist das Stützskelett 16 im wesentlichen an die Kontur des Halterings 10 angepaßt, der stark belastete mittlere Bereich des Gewirkes 15 ist mit einem durchgehenden Längssteg 17 ausgestattet. Dieser Längssteg 17 hat die Aufgabe, den Hauptdruck des zu reinigenden Fluids abzufangen. Die gewölbte Ausführung des Siebelements 13 erhöht einerseits die wirksame Filterfläche, andererseits wird das Widerstandsmoment gegenüber dem Fluid und entgegen der Strömungsrichtung erhöht.

## Patentansprüche

1. Siebelement zur Filtrierung flüssiger oder gasförmiger Stoffe, bestehend aus einem Haltering (10), einem daran angeordneten Siebfilter (13), wobei das Siebfilter (13) eine Maschenware als Gewirke (15) ist und mit einem Stützskelett (16) verbunden ist und an diesem anliegt und das Stützskelett (16) mit dem Haltering (10) verbunden ist und wobei das Gewirke (15) ein Kunststoffgewirke ist und aus monofilen oder multifilen Fasern hergestellt ist, wobei im mittleren Bereich des Gewirkes (15) ein durchgehender und mit dem Haltering unmittelbar verbundener Längssteg (17) vorgesehen ist und wobei das Gewirke (15) mit dem Stützskelett (16) und dem Haltering (10) aus thermoplastischen Kunststoff umspritzt ist, **dadurch gekennzeichnet, dass** das Siebelement in Form eines Siebkorbes ausgestaltet und gewölbt ist, welches zu einer Erhöhung der wirksamen Filterfläche beiträgt und ein höheres Widerstandsmoment gegenüber dem Fluid erzielt wobei die Haltering (10) den äusseren Rand des Siebelements bildet, und wobei der Längssteg (17) eine Verbindung zu dem äusseren Rand des Siebelements aufweist.

2. Verfahren zur Herstellung eines Siebelements gemäß Anspruch 1 zur Filtrierung von Flüssigkeiten oder Gase, mit einem Haltering (10) oder Halteelement und einem daran angeordneten Siebfilter (13), **dadurch gekennzeichnet, dass** das Siebfilter als Gewirke (15) in einer Fertigungseinrichtung eingelegt und mit einem Stützskelett (16) und einem Haltering (10) oder Halteelment aus thermoplastischem Kunststoff umspritzt wird.

3. Verfahren nach Anspruch 3, **dadurch gekennzeichnet, dass** das Gewirke (15) von einem Band der Fertigungseinrichtung zugeführt wird und von diesem Band abgetrennt wird.

## Claims

1. Screening element for filtering liquid or gaseous substances, said element comprising a retaining ring (10) and a screening filter (13) disposed thereon, the screening filter (13) being a mesh article such as a woven fabric (15), and said filter being connected to a supporting framework (16) and abutting against said framework, and the supporting framework (16) being connected to the retaining ring (10), and the woven fabric (15) being a plastics material woven fabric and being produced from monofilament or multifilament fibres, a continuous elongate web (17) being provided, which is directly connected to the retaining ring, and the woven fabric (15), together with the supporting framework (16) and the retaining ring (10), being injection-moulded from thermoplastic plastics material, **characterised in that** the screening element is in the form of a perforated basket and is curved, such curvature contributing towards an increase in the effective filter area and achieving a higher moment of resistance than the fluid, the retaining ring (10) forming the outer edge of the screening element, and the elongate web (17) being connected to the outer edge of the screening element.

2. Method of producing a screening element, according to claim 1, for filtering liquids or gases, said element having a retaining ring (10) or a retaining element and a screening filter (13) disposed thereon, **characterised in that** the screening element, as a woven fabric (15), is inserted in a manufacturing arrangement and, together with a supporting framework (16) and a retaining ring (10) or retaining element, is injection-moulded from thermoplastic plastics material.

3. Method according to claim 2, **characterised in that** the woven fabric (15) is supplied by a belt to the manufacturing arrangement and removed from this belt.

## Revendications

1. Elément filtrant pour filtrer des produits liquides ou gazeux, composé d'une bague de maintien (10) sur laquelle est monté un filtre-tamis (13), constitué par un tissu à mailles (15), relié à une ossature de soutien (16) sur laquelle il s'appuie et qui est elle-même reliée à la bague de maintien (10), le tissu à mailles (15) étant en matière plastique et fabriqué à partir de fibres à mono ou multifilaments, avec au milieu du tissu (15) une barre longitudinale (17) continue, reliée directement à la bague de maintien, et la bague de maintient (10), et l'ossature de soutien (16) étant en matière thermoplastique injectée le tissu (15),
**caractérisé en ce que**
l'élément a la forme d'une corbeille et est bombé, ce qui augmente la surface active de filtration et crée un couple résistant plus élevé par rapport au fluide, la bague de maintien (10) constituant le bord externe de l'élément filtrant, bord auquel est relié la barre longitudinale (17).

2. Procédé de fabrication d'un élément filtrant selon la revendication 1, pour filtrer des liquides ou des gaz, comportant un élément filtrant (13) monté sur une bague ou un élément de maintien (10),
**caractérisé en ce que**
le filtre-tamis à l'état de tissu à mailles (15) est placé dans un dispositif de fabrication et est enrobé par une ossature de soutien (16) et une bague de maintien (10) ou un élément de maintien en matière thermoplastique injectée.

3. Procédé selon la revendication 2,
**caractérisé en ce que**
le tissu à mailles (15) est amené à partir d'une bande, dans le dispositif de fabrication où il est séparé de cette bande.
